# EUROPÄISCHE PATENTSCHRIFT

(11) **EP 0 686 462 B1**
(45) Veröffentlichungstag und Bekanntmachung des Hinweises auf die Patenterteilung: **12.11.1997**
(21) Anmeldenummer: 95810319.4
(22) Anmeldetag: 11.05.1995
(51) Int. Cl.: B25H 3/00, A61C 19/02, A61B 19/02

(54) **Kassette für Instrumente und Apparate, insbesondere für die Zahnmedizin**
Cassette for instruments and tool, especially for dentistry
Cassette pour instruments et outils, en particulier pour l'art dentaire

(30) Priorität: 06.06.1994 CH 1767/94
(43) Veröffentlichungstag der Anmeldung: 13.12.1995
(73) Patentinhaber: INSTITUT STRAUMANN AG, 4437 Waldenburg (CH)
(72) Erfinder: Wagner, Thomas, CH-6260 Reiden (CH); Scacchi, Roland, CH-4436 Oberdorf (CH); Rérat, Pascal, CH-4416 Bubendorf (CH); Keller, Paul, CH-4108 Witterswil (CH)
(74) Vertreter: Ullrich, Gerhard, Dr.

(56) Entgegenhaltungen:
- CH-A- 628 237
- DE-A- 3 117 264
- DE-A- 3 534 839
- US-A- 5 312 250

## Beschreibung

Die Erfindung betrifft eine Kassette für Instrumente und Apparate, insbesondere für die Zahnmedizin, gemäss dem Oberbegriff des Patentanspruchs 1.

Kassetten für Instrumente, z.B. Zahnbohrer, Zahnfräser und Apparate, z.B. Ratschen, Schraubendreher und Geräte als endodontische Hilfsteile sind in vielen Ausführungen bekannt. Nach dem Stand der Technik werden zahnärztliche Instrumente in Schalen, einzeln in Bohrungen oder gemeinsam in grösseren Bohrungen aufbewahrt. Zahnärztliche Apparate werden auch in besonderen Boxen aufbewahrt.

Heute gebräuchliche Kassetten sind hinsichtlich ihrer Handhabung ungünstig ausgebildet. So ist die Standfestigkeit und die Uebersichtlichkeit der darin aufbewahrten Instrumente meist sehr mangelhaft. Gleichzeitig ist eine mühe- und gefahrlose einhändige Entnahme der Instrumente oft nicht möglich. Zudem wird die Bruchgefahr der Schneiden und Bohrspitzen bei Berührung untereinander, mit den Kassettenwänden oder mit aussenstehenden Gegenständen im allgemeinen nicht verhindert.

Das Zahnmaterial, in das die Instrumente, wie Bohrer und Fräser, während der Zahnbearbeitung eindringen müssen, ist bekanntlich hart und abrasiv. Bohrer und Fräser, die mit diesem Material Verwendung finden, müssen sehr hart sein, um eine akzeptable Standzeit zu gewährleisten. Diese harten und abnützungsresistenten Bohrer- und Fräsermaterialien sind bekannt als spröde und zerbrechlich. Daher sind Schneiden und Spitzen von derartigen Fräsern und Bohrern sehr anfällig auf Abrieb und Bruch der Schneiden, wenn unsorgfältig gehandhabt, und müssen unbedingt ohne jede Wandberührung sicher gelagert sein.

Nebst den Vorgenannten Erfordernissen sollte eine Kassette für medizinische Instrumente und Apparate auch die immer wieder notwendige Reinigung und Desinfektion der im zahnmedizinischen Bereich verwendeten Instrumente und Geräte erleichtern. Dazu muss die Kassette nicht nur selbst einfach und hygienisch einwandfrei zu reinigen sein, sondern gleichzeitig auch direkt als Behältnis für die im Dampfbad - von maximal 135°C - zu sterilisierenden Instrumente und Geräte verwendbar sein.

Kassetten für den zahnmedizinischen Anwendungsbereich, die gleichzeitig alle vorgenannten Erfordernisse erfüllen, sind bis heute nicht bekannt.

In der WO-A-92/15502 wird ein Transportbehälter für Spiralbohrer offenbart, wobei eine veränderliche Anzahl Spiralbohrer immobil gehalten wird, um jeden schädlichen Kontakt der Bohrerspitzen innerhalb der Innenwände des Behälters zu verhindern. Dazu hat der Behälter einen Bodenteil, welcher mittels Scharnier verbunden ist mit einem Deckelteil, der nach unten schwenkbar zum Kontakt mit dem Bodenteil ausgebildet ist. Mehrere quaderförmige Aufnahmebehälter für Spiralbohrer sind am Bodenteil befestigt. Aufnahme-Oeffnungen für Spiralbohrer in jedem Aufnahmebehälter sind ausgebildet zur Aufnahme eines oder mehrerer Spiralbohrer, von denen jeder mit einem umlaufenden Begrenzungsring ausgerüstet ist zwecks Begrenzung der Einsteck-Tiefe. Eine Mehrzahl von Halteplatten erstrecken sich vom Deckelteil abwärts. Mit geschlossenem Deckelteil ist somit eine separate Halteplatte angeordnet zwischen zwei benachbarten Aufnahme-Oeffnungen für Spiralbohrer derart, dass die untere Fläche der Halteplatte angeordnet ist oberhalb der oberen Begrenzungsringflächen, die an den in den Aufnahme-Oeffnungen eingebrachten Spiralbohrern ausgebildet sind. Damit wird errreicht, dass jede Aufwärtsbewegung der an den Spiralbohrern angebrachten Ringe begrenzt ist. - Diese Ausbildung der Kassette hat aber den Nachteil, dass bei geöffnetem Deckelteil ein Spiralbohrer aus der Aufnahme-Oeffnung herausfallen kann. Zudem ist jeder Spiralbohrer mit einem Begrenzungsring auszurüsten, was aufwendig ist.

Eine Kassette zur Aufbewahrung länglicher Werkzeuge, wie Spiralbohrer, Gewindebohrer und dgl. ist aus der Patentschrift DE-C-3500569 bekannt. Die Kassette hat einen Deckelteil und einen daran angeschlossenen Bodenteil sowie einen am Bodenteil angeordneten Aufnahmeteil mit Führungsaufnahmen für die Werkzeuge, die im wesentlichen senkrecht zur Schwenkachse des Bodenteils ausgerichtet sind. Jede Führungsaufnahme weist zwei Führungsausnehmungen auf, deren erste eine zentrische und im wesentlichen spielfreie Halterung für das Werkzeug bildet und deren zweite eine Form besitzt, die eine Schwenkbewegung des Werkzeugs um die erste Führungsausnehmung in zur Gelenkachse des Bodenteils senkrechter Ebene ermöglicht. - Der Nachteil dieser Ausbildungsform besteht darin, dass die Kassette nur mässige Standfestigkeit hat, die Werkzeuge bei geöffnetem Deckelteil herausfallen können und die beweglichen Teile sowie die Führungsaufnahmen nicht zuverlässig gereinigt werden können.

Die Erfindung löst bei Kassetten der vorgenannten Art die Aufgabe, die Instrumente gegen jede Beschädigung zu sichern, sei es beim Transport, beim Oeffnen oder Schliessen der Kassette, sei es bei Stössen oder Bewegungen wahrend der Sterilisation. Die erfindungsgemässe Kassette soll dabei nicht nur eine sichere Lösung gegen jedes unbeabsichtigte Herausfallen der Instrumente bieten, sondern auch jede Verletzungsgefahr des Benützers bei der Entnahme oder beim Einordnen der Instrumente und Apparate auf ein Minimum reduzieren.

Dazu sollen sich, etwa beim Bereitstellen der Kassette zum Einordnen oder zur Entnahme der Instrumente, die Kassette selbst wie auch deren aufgeklappte Teile sicher positionieren und in erleichternde Entnahmestellung schwenken lassen. Gleichzeitig wäre es noch zweckmässig, die aufzubewahrenden Instrumente jederzeit übersichtlich in einer Linie anzuordnen. Die Einzelteile der erfindungsgemässen Kassette sollen schlicht und robust ausgebildet sein. Die neue Kassette soll sicher zu handhaben und möglichst einfach zu reinigen sein. Sie soll sich auch direkt zum Desinfizieren der darin aufbewahrten Instrumente und Geräte in den jeweils gewünschten Flüssigkeits- und Dampfbädern verwenden lassen. Schliesslich soll die neue Kassette als eine komplette Behandlungseinheit mit allen für die vorgesehene Zahnbehandlung benötigten Instrumente und Apparate verwendbar sein.

Die Erfindung erreicht dies durch die kennzeichnenden Merkmale des Patentanspruchs 1. Spezielle Ausführungsformen der Erfindung beinhalten die abhängigen Patentansprüche.

Im folgenden wird anhand der Zeichnung ein bevorzugtes Ausführungsbeispiel des Erfindungsgegenstandes erläutert. Es zeigen in der Zeichnung:
- Fig. 1: eine geöffnete Kassette für Instrumente und Apparate in Draufsicht mit darin angeordnetem Einsatz samt Halter und Träger sowie Schale;
- Fig. 2: einen Schnitt durch die Kassette entlang der Linie A-A der Fig. 1, wobei Halter und Träger in aufgeklappter Stellung dargestellt sind;
- Fig. 3: einen Teilschnitt entlang der Linie B-B der Fig. 2 durch die Halterung und Fixierung eines Instruments, im vergrösserten Massstab;
- Fig. 4: einen Teilschnitt entlang der Linie C-C der Fig. 2 mit der Einheit in abgeklappter Stellung, im vergrösserten Massstab;
- Fig. 5: einen Teilschnitt entlang der Linie C-C der Fig. 2 mit der Einheit in aufgeklappter Stellung, in vergrössertem Massstab;
- Fig. 6: einen Teilschnitt entlang der Linie D-D der Fig. 1 mit der Einheit in abgeklappter Stellung, in vergrössertem Massstab und
- Fig. 7: einen Teilschnitt entlang der Linie D-D der Fig. 1 mit der Einheit in aufgeklappter Stellung, in vergrössertem Massstab.

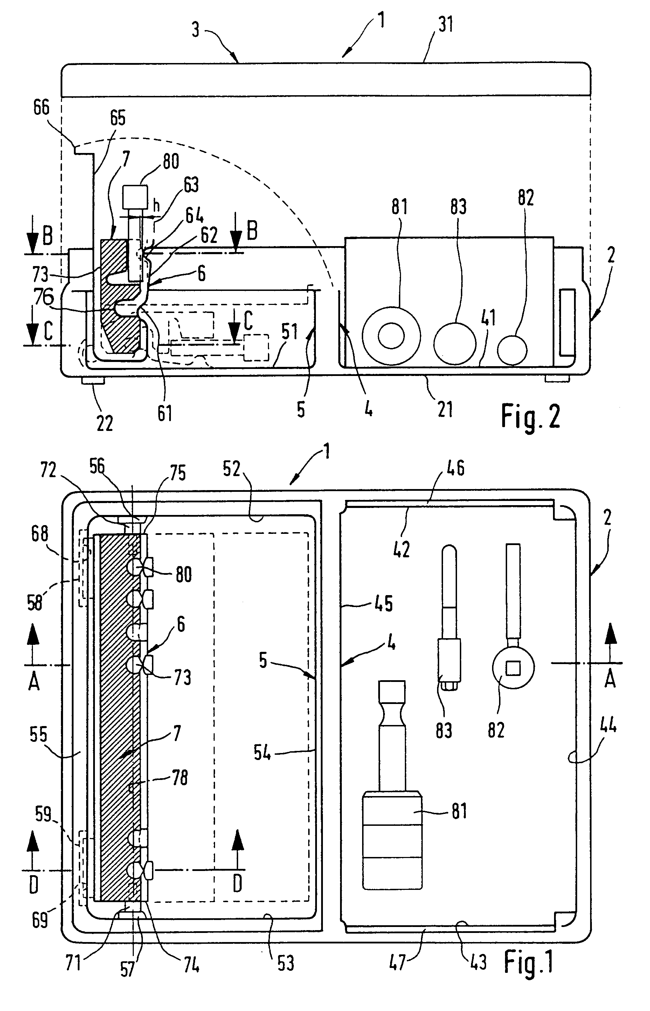

Die in den Figuren 1,2 und 3 dargestellte Kassette 1 besteht aus einem Behälter 2 und einem aufsetzbaren Deckel 3. Beide Teile 2,3 sind vorzugsweise aus Aluminium gefertigt, welches oberflächenbehandelt ist. Der Behälter 2 weist einen gelochten Boden 21 sowie Abstellfüsse 22 auf. Der Deckel 3 weist ebenfalls eine gelochte Decke 31 auf.

Im Behälter 2 sind mindestens eine Schale 4 zur Aufnahme von Apparaten 81-83 sowie mindestens ein Einsatz 5 zur Aufnahme von Instrumenten 80 vorgesehen. Beide Teile 4 und 5 sind beispielsweise aus rostfreiem Stahl gefertigt.

Die Schale 4 weist einen gelochten Boden 41 auf. Von dessen Schmalkanten gehen Stirnwände 42,43 mit Tragleisten 46,47 und von dessen Längskanten Seitenwände 44,45 ohne Tragleisten aus. Die Stirnwände 42, 43 und Seitenwände 44,45 sind nach oben sich erweiternd ausgebildet und die Tragleisten 46,47 sind vorzugsweise nach innen abgebogen.

Der Einsatz 5 weist einen gelochten Boden 51 auf. Von dessen Schmalkanten gehen Stirnwände 52,53 und von dessen Längskanten Seitenwände 54,55 aus. Dabei weisen die Stirnwände 52,53 je eine Tragleiste und eine der Seitenwände 54,55 eine dritte Tragleiste auf, wobei die drei Tragleisten umlaufend sind. In den Stirnwänden 52,53 sind Schwenkzapfenführungen 56,57 ausgebildet zur Aufnahme von Schwenkzapfen 71,72 eines Trägers 7.

Der Träger 7 ist im Querschnitt im wesentlichen rechteckig ausgebildet. Als Körper hat er die Form eines länglichen Quaders. Dieser besitzt an seiner oberen, schmalen Deckfläche in gerader Linie angeordnete und gleichmässig zueinander beabstandete Einstecköffnungen 73. Diese Einstecköffnungen 73 erstrecken sich von der oben liegenden Deckfläche des Trägers 7 nahezu bis zu dessen unten liegenden Bodenfläche, unter Beibehaltung einer Restwanddicke. Die Einstecköffnungen 73 nehmen Instrumente 80 kippsicher und mit Spiel auf. Der Träger 7 hat im weiteren eine Schwenkachse 78, wozu er an seinen Stirnwänden 74,75 die bereits erwähnten Schwenkzapfen 71,72 aufweist. Der Träger 7 ist in eine bodenparallele, horizontale Stellung abklappbar und in eine vertikale Stellung aufklappbar.

Der Träger 7 ist in einen Halter 6 eingeschoben, der im Querschnitt im wesentlichen U-förmig ausgebildet ist. Ein Wulst 61 im einen Schenke 62 des Halters 6 greift in eine Vertiefung 76 des Trägers 7 ein und fixiert damit in Wirkverbindung mit dem anderen Schenkel 65 des Halters 6 die Lage des Trägers 7 im Halter 6 in zwei von drei Richtungen. Der eine Schenkel 62 des Halters 6 liegt zudem den Einstecköffnungen 73 des Trägers 7 gegenüber.

Jede Einstecköffnung 73 besitzt im wesentlichen eine zylindrische Form. Sie weist auch eine offene Seitenfläche 77 zum einen Schenkel 62 des Halters 6 hin auf. Unter Berücksichtigung dieser offenen Seitenfläche 77 der Einstecköffnungen 73 haben die Querschnittsflächen der Einstecköffnungen 73 die Form eines Kreises, von dem ein Kreissegment abgetrennt wurde. Das Verhältnis der Bogenhöhe h des abgetrennten Kreissegments zum Kreisradius r der Kreisrestfläche beträgt dabei vorzugsweise 2/5, kann aber je nach dem konkreten Anwendungsfall zwischen 1/5 und 4/5 liegen. Der Radius r* des einzelnen in der Einstecköffnung 73 befindlichen Instrumentenschafts ist jeweils etwas kleiner als der Kreisradius r der dazugehörigen Einstecköffnung 73, aber grösser als die Bogenhöhe h des abgeschnittenen Kreissegments (in Formel: h < r* < r), so dass ein Teil des Instrumentenschafts 80 durch die offene Seitenfläche 77 der Einstecköffnung 73 nach aussen ragt. Die jeweilige Grösse des Kreisradius r der Einstecköffnungen 73 im Träger 7 ist natürlich nach den vorgegebenen, genormten Massen des einzelnen Instrumentenschafts auszurichten.

Mit geringem Abstand von der vorderen Längswand des Trägers 7 sind Stopparme 63 am einen Schenke 62 des Halters 6 angeordnet. Jeder Einstecköffnung 73 ist bei deren offenen Seitenfläche 77 ein solcher Stopparm 63 zugeordnet. Dabei ist jeder Stopparm 63 mit einer Auswölbung 64 ausgebildet, um in Wirkverbindung mit der Einstecköffnung 73 die Instrumente 80 durch Anpressdruck immobil zu halten, d.h. gegen Bewegen in ihren Einstecköffnungen 73 zu sichern. Diese Sicherung der Instrumente ist sowohl in aufgeklappter wie abgeklappter Stellung der Einheit 6,7 gewährleistet, ebenso beim Herausnehmen der Einheit 6,7 aus dem Einsatz 5. Die Stopparme entspringen materialeinheitlich dem Halter 6, d.h. die Ausbildung ist kostengünstig und von einfacher technologischer Konzeption.

Indem die Einstecköffnungen 73 in Linie und in Längsrichtung des Trägers 7 angeordnet sind, ergibt sich in aufgeklappter Stellung des Trägers 7 eine gute Uebersicht über die Instrumente 80. Der aus dem Träger 7 jeweils herausragende Teil des Instrumentenschafts kann mit der Pincette leicht ergriffen werden. Das gewünschte Instrument 80 kann so auf hygienisch einwandfreie Weise dem Träger 7 einfach und zielsicher entnommen werden.

Die folgenden Aussagen sind im Zusammenhang mit Fig. 1,4,5,6 und 7 ersichtlich.

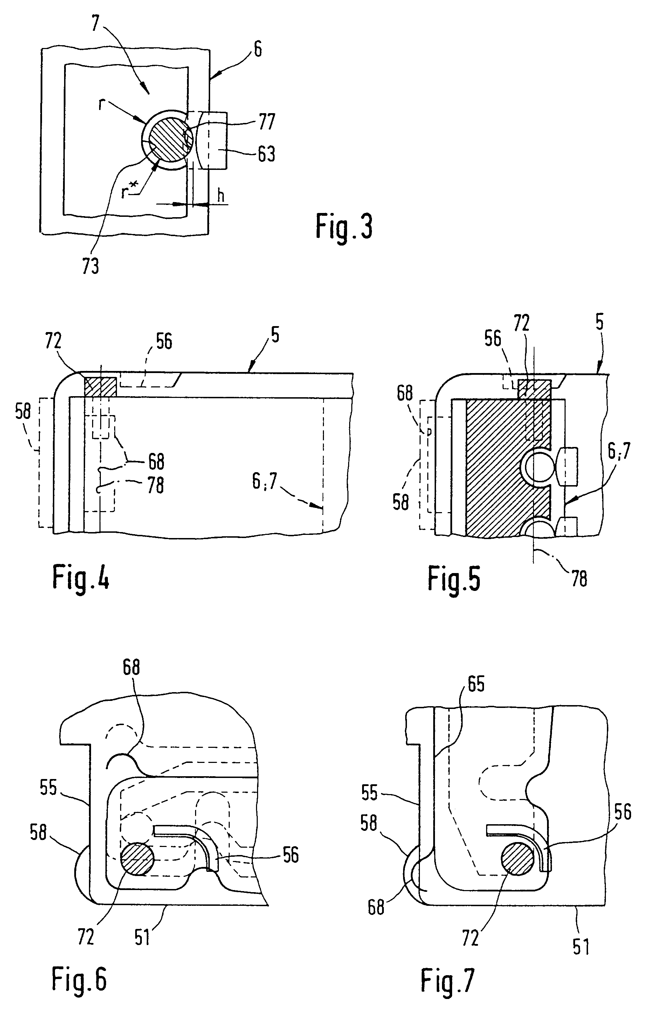

Der andere Schenkel 65 des Halters 6 weist an seinem freien Ende eine im Querschnitt L-förmige Abkantung 66 auf. Bei abgeklappter Einheit 6,7 ist die Abkantung 66 als Griff zum Aufklappen der Einheit 6,7 verwendbar, d.h. zum Stellen aus ihrer horizontalen Position im Behälter 5 in ihre senkrechte Position durch Drehen der ganzen Einheit 6,7 um ca. 90° um die durch die Schwenkzapfen 71,72 verlaufende Schwenkachse 78. Die Einheit 6,7 wird dabei mittels der Schwenkzapfen 71,72 in Wirkverbindung mit den Schwenkzapfenführungen 56,57 des Einsatzes 5 in Lagern gehalten, und zwar gemäss Fig. 7. Eine Einrastung erfolgt dadurch, dass zwei Ausformungen 58,59 in der hinteren Seitenwand 55 des Einsatzes 5 zusammen mit zwei Federwulsten 68,69 an den unteren Ecken des Schenkels 65 des Halters 6 wirken, indem die Federwulste 68,69 beim Drehen der Einheit 6,7 in die senkrechte Stellung unter Kraftaufwand etwas zurückgebogen werden müssen. Dadurch rastet die Einheit 6,7 in der aufgeklappten Stellung spielfrei ein, wobei die Schwenkzapfen 71,72 in ihrer Bewegungen zudem durch die eine Seitenwand 55 und den Boden 51 des Einsatzes 5 geführt und begrenzt werden.

Um die Einheit aus Halter 6 und Träger 7 aus dem Einsatz 5 zu entfernen, s. Fig. 6, ist die Einheit 6,7 in die horizontale Stellung zu bringen. In dieser Stellung lässt sie sich in vertikaler Richtung heben und aus dem Einsatz 5 herausnehmen, wobei die Schwenkzapfen 71,72 die Lücke zwischen der Schwenkzapfenführung 56 bzw. 57 und der einen Seitenwand 55 passieren.

Das Drehen oder Klappen um die Schwenkachse 78 der Einheit 6,7 aus Halter 6 und Träger 7 im Einsatz 5 in die horizontale bzw. vertikale Stellung und die Einrastung wird allein durch das Zusammenwirken der Federwulste 68,69 am Halter 6 bzw. der Ausformungen 58,59 am Einsatz 5 mit den angeformten Schwenkzapfen 71,72 am Träger 7 und der Seitenwand 55 samt Boden 51 ermöglicht. Es sind keine Schweissungen, Verlötungen, Verschraubungen, Vernietungen oder andere Verbindungen mit schwierig zu reinigenden und zu sterilisierenden Oberflächen verwendet. Auch kann die Kassette, wie für den Fachmann ohne weiteres erkennbar ist, mit wenigen Handgriffen sofort in ihre Einzelteile zerlegt werden. Die Zerlegbarkeit in wenige einfache Einzelteile bewirkt, dass die Kassette auf einfache Weise hygienisch einwandfrei gereinigt werden kann.

## Patentansprüche

1. Kassette (1) für Instrumente und Apparate, insbesondere für die Zahnmedizin, wobei ein Behälter (2) und ein zugehöriger Deckel (3) vorgesehen sind, wobei im Behälter (2) mindestens eine Schale (4) und daneben mindestens ein Einsatz (5) angeordnet sind, und wobei der Einsatz (5) eine Einheit (6,7) für die Aufnahme von Instrumenten (80) aufweist, **dadurch gekennzeichnet, dass**
a. die Einheit (6,7) aus einem Halter (6) und einem Träger (7) besteht,
b. die Einheit (6,7) um eine Schwenkachse (78) in Lagern (56,57 bzw. 71,72) klappbar ist in eine abgeklappte, bodenparallele Stellung und in eine aufgeklappte, vertikale Stellung,
c. die Einheit (6,7) in der abgeklappten Stellung in den Lagern (56, 57 bzw. 71,72) spielaufweisend und aus dem Einsatz (5) ohne Hilfsmittel entfernbar ist und in der aufgeklappten Stellung in den Lagern (56,57 bzw. 71,72) spielfrei fixiert und durch Mittel (58,59 bzw. 68,69) in dieser Lage lösbar gehaltert ist,
d. der Träger (7) Einstecköffnungen (73) für die Aufnahme der Instrumente (80) aufweist, wobei jede Einstecköffnung (73) eine Form besitzt, die mit einem Stopparm (63) am Halter (6) derart zusammenwirkt, dass das in der Einstecköffnung (73) befindliche Instrument (80) durch den Anpressdruck des jeweiligen Stopparms (63) gegen Lageveränderung gesichert ist und,
e. ein die Instrumente (80) überragender Griff (66) vorgesehen ist.

2. Kassette nach Patentanspruch 1, dadurch gekennzeichnet, dass
a. die Form jeder Einstecköffnung (73) zylinderisch und mit einer offenen Seitenfläche (77) ausgebildet ist, welche Seitenfläche (77) den Stopparm (63) mit dessen Ausformung (64) am Instrument (80) anliegen lässt,
b. der Querschnitt jeder Einstecköffnung (73) eine um das Kreissegment der Bogenhöhe (h) reduzierte Kreisfläche ist, wobei das Verhältnis von Bogenhöhe (h) und Kreisradius (r) mindestens 1/5 und höchstens 4/5, vorzugsweise jedoch 2/5 beträgt und,
c. die Stopparme (63) materialeinheitlich dem Halter (6) entspringen.

3. Kassette nach einem der Patentansprüche 1 und 2, dadurch gekennzeichnet, dass die Einstecköffnungen (73) einreihig, in gerader Linie und in gleichmässigem, parallelem Abstand von einander angeordnet sind, um mühelose Erkennbarkeit, Greifbarkeit und Einordnung jedes Instrumentes (80) zu gewährleisten.

4. Kassette nach einem der Patentansprüche 1 bis 3, dadurch gekennzeichnet, dass in abgeklappter Stellung der Einheit (6,7) die Kassette (1) in ihre Einzelteile (2,3,4,5,6,7) zerlegbar ist, zwecks gründlicher, hygienischer Reinigung.

5. Kassette nach einem der Patentansprüche 1 bis 4, dadurch gekennzeichnet, dass jede Einstecköffnung (73) formmässig für die gleitende Aufnahme eines Instrumentes (80) ausgebildet ist.

6. Kassette nach einem der Patentansprüche 1 bis 5, dadurch gekennzeichnet, dass der Halter (6) und die übrigen Einzelteile (2,3,4,5,7) aus sterilisierfähigem Material sind.

7. Kassette nach einem der Patentansprüche 1 bis 6, dadurch gekennzeichnet, dass der Halter (6) aus Aluminium und die übrigen Einzelteile (2,3,4,5,7) aus rostfreiem Stahl sind.

8. Kassette nach einem der Patentansprüche 1 bis 7, dadurch gekennzeichnet, dass alle Einzelteile (2,3,4,5,6 und 7) je einstückig und ohne Hilfsmittel voneinander trennbar sind.

9. Verwendung der Kassette nach einem der vorangehenden Ansprüche 1 bis 8 zum Handling und Sterilisieren von für die Zahnbehandlung vorgesehenen Instrumenten und Apparaten.

## Claims

1. A cassette (1) for instruments and appliances especially for dentistry, in which there is a container (2) and a relevant cover (3) belonging thereto, where in the container (2) are arranged at least one tray (4) and next to this at least one insert (5), and where the insert (5) has a unit (6, 7) to hold instruments (80), characterised in that
a. the unit (6, 7) comprises a holder (6) and a support (7),
b. the unit (6, 7) folds around a swivel axis (78) on bearings (56, 57 or 71, 72 resp.), into a position parallel to the base when folded down and in a vertical position when folded up,
c. the unit (6, 7) in the folded-down position in the bearings (56, 57 or 71, 72 resp.) is removable with clearance from the insert and without any auxiliary means, and in the folded-up position is fixed without clearance in the bearings (56, 57 or 71, 72 resp.) and is detachably supported in this position by means (58, 59 or 68, 69 resp.),
d. the holder (7) has insertion openings (73) for accommodating instruments (80), where each opening (73) is shaped so that it works together with a stop arm (63) on the holder (6) in such a way that the instrument (80) which is in the opening (73) is secured against displacement by the contact pressure of the respective stop arm (63), and
e. there is a handle (66) projecting over the instruments (80).

2. A cassette according to claim 1, characterised in that
a. the shape of each insertion opening (73) is cylindrical and has an open side face (77) which enables the stop arm (63) with its formation (64) to rest against the instrument (80),
b. the cross section of each insertion opening (73) is a circular area reduced by the circular segment of the arch height (h), where the ratio of arch height (h) to radius (r) is a minimum of 1/5 and a maximum of 4/5, preferably however 2/5, and
c. the stop arms (63) originate from the holder (6) in the same material.

3. A cassette according to any one of claims 1 and 2, characterised in that the insertion openings (73) are arranged in one row, in a straight line, parallel and at equal distance from each other to ensure that each instrument (80) is recognisable, accessible and can be easily classified.

4. A cassette according to any one of claims 1 to 3, characterised in that when the unit (6, 7) is in a folded-down position, the cassette (1) can be dismantled into its component parts (2, 3, 4, 5, 6, 7), to enable thorough, hygienic cleaning.

5. A cassette according to any one of claims 1 to 4, characterised in that each insertion opening (73) is shaped so as to ensure the smooth insertion of an instrument (80).

6. A cassette according to any one of claims 1 to 5, characterised in that the holder (6) and the other components (2, 3, 4, 5, 7) are made of a sterilisable material.

7. A cassette according to any one of claims 1 to 6, characterised in that the holder (6) is made of aluminum and the other components (2, 3, 4, 5, 7) are made of stainless steel.

8. A cassette according to any one of claims 1 to 7, characterised in that all the components (2, 3, 4, 5, 6 and 7) may be separated from each other one piece at a time and without any auxiliary means.

9. Use of the cassette according to any one of the preceding claims 1 to 8 for the handling and sterilisation of instruments and appliances for use in dental treatment.

## Revendications

1. Coffret (1) pour instruments et appareils, en particulier pour l'art dentaire, comprenant un récipient (2) et un couvercle (3) associé à celui-ci, dans le récipient (2) étant disposés au moins une cuvette (4) et au moins un casier (5) à côté de celle-ci, le casier (5) présentant une unité (6, 7) destinée à recevoir des instruments (80), caractérisé en ce que
a) l'unité (6, 7) est composée d'un support (6) et d'un porte-instruments (7);
b) l'unité (6, 7) peut pivoter autour d'un axe de pivotement (78) dans des paliers (56, 57 et 71, 72), dans une position rabattue parallèle au fond et dans une position relevée verticale;
c) l'unité (6, 7), dans la position rabattue, présente du jeu au niveau des paliers (56, 57 et 71, 72) et peut être enlevée du casier (5) sans moyen auxiliaire et, dans la position relevée, elle est fixée sans jeu dans les paliers (56, 57 et 71, 72) et est maintenue dans cette position de manière séparable, par des moyens (58, 59 et 68, 69);
d) le porte-instruments (7) présente des ouvertures d'insertion (73) destinées à recevoir les instruments (80), chaque ouverture d'insertion (73) ayant une forme qui coopère avec un bras d'arrêt (63) sur le support (6) de telle sorte que l'instrument se trouvant dans l'ouverture d'insertion (73) soit immobilisé par la pression d'appui du bras d'arrêt respectif (63) de manière à ne pas changer de position, et
e) une prise pour les doigts (66) surplombant les instruments (80) est prévue.

2. Coffret suivant la revendication 1, caractérisé en ce que
a) la forme de chaque ouverture d'insertion (73) est cylindrique et présente une surface latérale ouverte (77), ladite surface latérale (77) permettant au bras d'arrêt (63) de porter, par sa partie de configuration spéciale (64), sur l'instrument (80),
b) la section transversale de chaque ouverture d'insertion (73) est une surface circulaire amputée du segment de cercle de la hauteur d'arc (h), le rapport entre la hauteur de l'arc (h) et le rayon du cercle valant au moins 1/5 et au plus 4/5, mais, de préférence 2/5, et
c) les bras d'arrêt (63) sont venus d'un seul tenant avec le support (6).

3. Coffret suivant la revendication 1 ou 2, caractérisé en ce que les ouvertures d'insertion (73) sont disposées en une rangée, en ligne droite et à égale, parallèl distance les unes des autres de manière à garantir une reconnaissance, une préhension et une classification aisées de chaque instrument (80).

4. Coffret suivant l'une quelconque des revendications 1 à 3, caractérisé en ce que dans la positon rabattue de l'unité (6, 7), le coffret (1) peut être démonté en ses divers composants (2, 3, 4, 5, 6, 7) en vue d'un nettoyage hygiénique approfondi.

5. Coffret suivant l'une quelconque des revendications 1 à 4, caractérisé en ce que chaque ouverture d'insertion (73) présente une forme appropriée pour la réception d'un instrument (80) qui y est introduit par glissement.

6. Coffret suivant l'une quelconque des revendications 1 à 5, caractérisé en ce que le support (6) et les autres composants (2, 3, 4, 5, 7) sont en une matière stérilisable.

7. Coffret suivant l'une quelconque des revendications 1 à 6, caractérisé en ce que le support (6) est en aluminium et les autres composants (2, 3, 4, 5, 7) sont en acier inoxydable.

8. Coffret suivant l'une quelconque des revendications 1 à 7, caractérisé en ce que tous les composants (2, 3, 4, 5, 6 et 7) sont chacun d'une seule pièce et peuvent être séparés les uns des autres sans moyen auxiliaire.

9. Utilisation du coffret suivant l'une quelconque des revendications précédentes 1 à 8, pour la manipulation et la stérilisation d'instruments et appareils prévus pour les soins dentaires.
